(19) Europäisches Patentamt

European Patent Office

Office européen des brevets

(11) Veröffentlichungsnummer: **0 373 316 B1**

(12) **EUROPÄISCHE PATENTSCHRIFT**

(45) Veröffentlichungstag der Patentschrift: **23.12.92**

(21) Anmeldenummer: **89118847.6**

(22) Anmeldetag: **11.10.89**

(51) Int. Cl.⁵: **B60T 13/58**, B60T 13/66

(54) **Verfahren und Anordnung zur Steuerung eines elektrisch gesteuerten Bremskreises einer Merhrkreis-Bremsanlage.**

(30) Priorität: **12.12.88 DE 3841750**

(43) Veröffentlichungstag der Anmeldung:
**20.06.90 Patentblatt 90/25**

(45) Bekanntmachung des Hinweises auf die
Patenterteilung:
**23.12.92 Patentblatt 92/52**

(84) Benannte Vertragsstaaten:
**AT CH DE ES FR GB GR IT LI NL SE**

(56) Entgegenhaltungen:
**EP-A- 0 146 769       EP-A- 0 189 077**
**EP-B- 0 088 911       DE-A- 3 603 143**
**FR-A- 2 566 729       GB-A- 2 151 731**
**GB-A- 2 156 021       US-A- 2 818 943**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Petersen, Erwin, Dr.Ing.
Fliederweg 22
W-3050 Wunstorf 1(DE)**
Erfinder: **Schult, Manfred, Dr.-Ing.
Carl-Zuckmayer-Strasse 4
W-3008 Garbsen 8(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

EP 0 373 316 B1

**Beschreibung**

Die Erfindung betrifft ein Verfahren und eine Anordnung zur Steuerung wenigstens eines elektrisch gesteuerten Bremskreises einer Mehrkreis-Bremsanlage gemäß den Oberbegriffen der Patentansprüche 1 und 2.

Ein derartiges Verfahren und eine derartige Anordnung sind aus Fig. 2 der EP-B-0 088 911 bekannt. Bei diesem Stand der Technik ist jeder Bremskreis sowohl elektrisch als auch durch Drucksignal steuerbar. Zu diesem Zweck weist dieser Stand der Technik in jedem Bremskreis einen sowohl elektrisch als auch durch das Drucksignal betätigbaren Bremsdruckmodulator (dort Relaisventile 30, 31, 37, 38) auf. Da ein derartiger Bremsdruckmodulator wegen seiner Kompliziertheit ein aufwendiges Gerät ist, ist auch die bekannte Lösung aufwendig, dies um so mehr als sie die Installation von wenigstens zwei Druckmodulatoren voraussetzt.

Der Erfindung liegt die Aufgabe zugrunde, ein Verfahren und eine Anordnung der eingangs genannten Arten mit einfachen Mitteln derart zu verbessern, daß sie mit verringertem Aufwand durchführbar sind.

Diese Aufgabe wird durch die in den Patentansprüchen 1 und 2, angegebene Erfindung gelöst. Vorteilhafte Fortbildungen und Ausgestaltungen der Erfindung sind in den Unteransprüchen angegeben.

Die Erfindung kann in Verbindung mit jedem geeigneten Druckmittel realisiert werden.

Die Erfindung vermeidet den Nachteil, daß, wenn eine Mehrkreis-Bremsanlage aus wenigstens einem elektrisch gesteuerten Bremskreis und wenigstens einem (nur) durch das Drucksignal gesteuerten Bremskreis besteht, der elektrisch gesteuerte Bremskreis in seinem Bremsdruckaufbau dem durch das Drucksignal gesteuerten Bremskreis voreilt, wodurch unausgeglichener Bremsbelagverschleiß des Fahrzeugs oder, im Falle einer Fahrzeugkombination, eines anderen Fahrzeugs gefördert wird.

Die Erfindung bietet den Vorteil, daß das Drucksignal den Bremsen des durch das Drucksignal gesteuerten Bremskreises direkt als Bremsdruck zugeführt werden kann. Dadurch besteht die Möglichkeit einer sehr einfachen und wenig aufwendigen Ausbildung dieses Bremskreises. Ist jedoch aufgrund von der Erfindung unabhängiger Gesichtspunkte, beispielsweise zur Verkürzung der Ansprechzeit, eine Maßnahme in diesem Bremskreis erforderlich, so bietet die Erfindung auch für diesen Fall eine wenig aufwendige Lösung, indem sie den Einsatz eines herkömmlichen Relaisventils anstelle eines oder mehrerer Druckmodulatoren gestattet.

Die erfindungsgemäße Anordnung bietet den Vorteil einer einfachen Überprüfbarkeit der Charakteristik und der Funktion eines Generators des zweiten Bremswertsignals oder elektrischen Teils des Bremswertgebers durch Vergleich des von diesem erzeugten ersten Bremswertsignals mit dem zweiten Bremswertsignal. In Fortbildung der Erfindung kann eine Abstimmeinrichtung vorgesehen sein, die im Falle einer Abweichung schlechthin oder einer Abweichung oberhalb eines vorbestimmten Toleranzwertes das erste Bremswertsignal wenigstens im wesentlichen an das zweite Bremswertsignal angleicht und damit etwa vorhandene Kennlinienfehler der Funktionsstörungen des genannten Generators oder des elektrischen Teils des Bremswertgebers wenigstens im wesentlichen beseitigt oder ausgleicht.

In einem Anwendungsfall, in dem der Bremsdruck als Bremswert dient und die Mehrkreis-Bremsanlage eine Einrichtung zur Erfassung des Beladungszustands des zugehörigen Fahrzeugs und/oder der dem elektrisch gesteuerten Bremskreis zugeordneten Achse(n) aufweist, kann die Erfindung dahingehend fortgebildet werden, daß sie auch eine Überprüfung des Bremswertsensors des durch das Drucksignal gesteuerten Bremskreises ermöglicht, der ja die Grundlage für die Überprüfung des elektrischen Teils des Bremswertgebers bildet. Diese Lösung, bei der der Bremswert (Bremsdruck) des elektrisch gesteuerten Bremskreises in ein elektrisches drittes Bremswertsignal umgesetzt wird und von einer beladungsabhängigen Abweichung derselben von dem zweiten Bremswertsignal ausgegangen wird, bietet eine wenig aufwendige Möglichkeit, die Erfindung erhöhten Sicherheitsbedürfnissen anzupassen.

Weitere Vorteile der Erfindung werden bei deren nun folgender Erläuterung anhand von in Zeichnungen dargestellten Ausführungsbeispielen angegeben.

Unter durchgehender Verwendung durchgezogener Linien für Druckmittelleitungen und strichpunktierter Linien für elektrische Verbindungen sowie gleicher Bezugzeichen für Bauteile mit gleichen Funktionen zeigen:

Fig. 1     schematisch eine Mehrkreis-Bremsanlage,

**Fig. 2**     schematisch eine andere Ausgestaltung der Mehrkreis-Bremsanlage nach Fig.1.

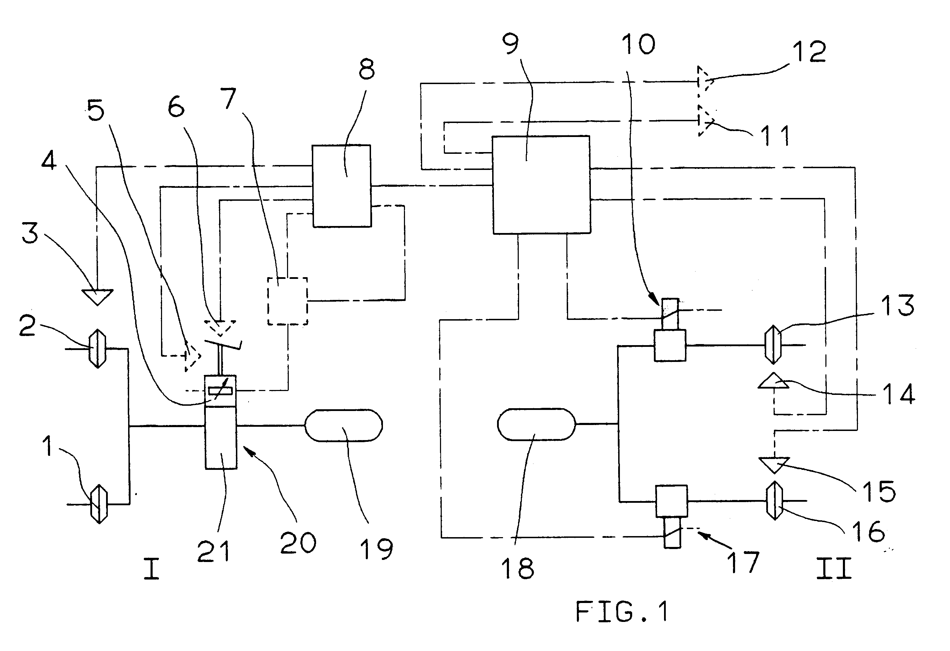

Die in Fig. 1 dargestellte Mehrkreis-Bremsanlage enthält einen durch ein Drucksignal gesteuerten Bremskreis und einen elektrisch gesteuerten Bremskreis, die generell mit (I bzw. II) bezeichnet sind.

Die Mehrkreis-Bremsanlage weist einen Bremswertgeber (20) auf, der an einem elektrischen Teil (4) ein elektrisches erstes Bremswertsignal und an einem Druckmittelteil (21) ein Drucksignal abgibt, deren Stärken in bekannter Weise von der dem Bremswertgeber zugeführten Betätigungskraft und/oder dessen Betätigungsweg abhängen.

Der elektrische Teil (4) und der Druckmittelteil (21) sind durch entsprechende Anordnung der Innenteile so gekoppelt, daß das erste Bremswertsignal bei intaktem druckgesteuertem Bremskreis (I) mit dem Druck am

Ausgang des Druckmittelteils (21) und bei defektem druckgesteuertem Bremskreis (I) direkt gebildet wird.

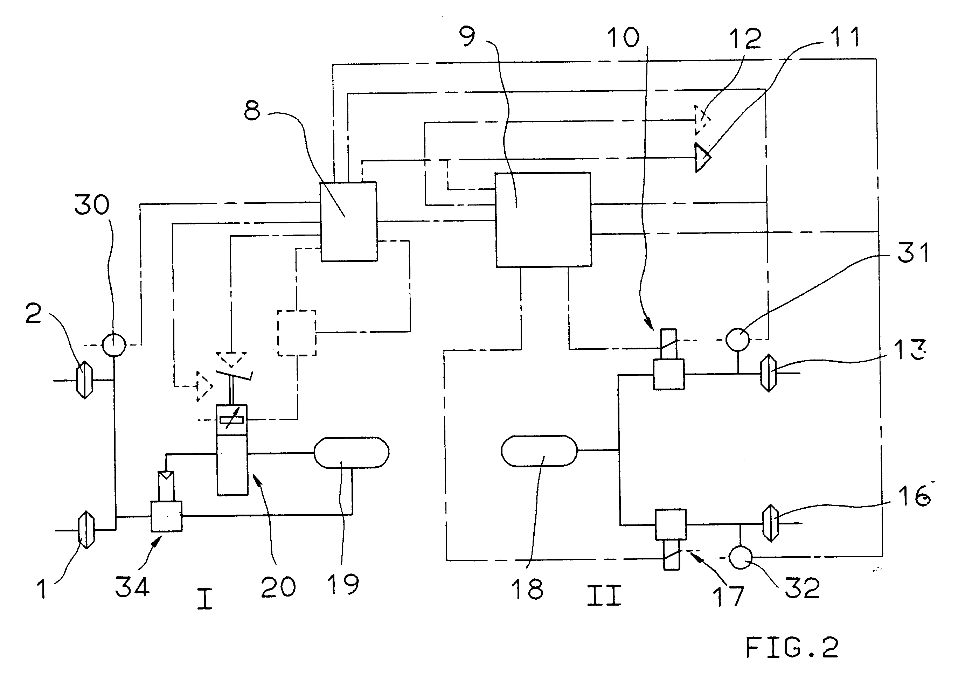

Der durch das Drucksignal gesteuerte Bremskreis (I) besteht aus einem Druckmittelvorrat (19), dem Druckmittelteil (21) des Bremswertgebers (20) und druckmittelbetätigten Bremsen (1, 2). Das Drucksignal gibt der Bremswertgeber (20) in der Weise ab, daß er aus dem Druckmittelvorrat (19) Druck zu den Bremsen (1, 2) durchläßt, bis am Ausgang des Druckmittelteils (21) der der Betätigungskraft und/oder dem Betätigungsweg entsprechende Druck herrscht. Dieser Druck wird im Ausführungsbeispiel den Bremsen (1, 2) direkt als Bremsdruck zugeführt. Er kann aber auch, wie im Ausführungsbeispiel nach Fig. 2 dargestellt, zur Steuerung des Bremsdrucks über ein Relaisventil verwendet werden. Auch ist die Anordnung weiterer üblicher Geräte (z.B. Bremskraftregler, Schnellöseventil usw.) in dem Bremskreis (I) möglich. Zur Vereinfachung wird dieser Bremskreis im folgenden als druckgesteuerter Bremskreis (I) bezeichnet.

Der elektrisch gesteuerte Bremskreis (II) besteht aus einem Druckmittelvorrat (18), druckmittelbetätigten Bremsen (13, 16), dem elektrischen Teil (4) des Bremswertgebers (20), einer elektrischen Bremswert-Steuereinrichtung (9, 10, 17, 14, 15), einem am druckgesteuerten Bremskreis (I) angeordneten Bremswertsensor (3) und einer Vergleichseinrichtung (8).

Die Versorgung der Druckmittelvorräte (18 und 19) erfolgt in bekannter Weise über eine nicht dargestellte Druckbeschaffungsanlage.

Der Bremswertsensor (3) ist derart ausgebildet, daß er den Bremswert der Bremsen (1, 2) mißt und diesen in ein elektrisches zweites Bremswertsignal umsetzt, also als dessen Generator wirkt, worauf weiter unten ausführlich eingegangen wird.

Die Vergleichseinrichtung (8) ist eingangsseitig mit dem elektrischen Teil (4) des Bremswertgebers (20) sowie dem Bremswertsensor (3) und ausgangsseitig mit dem oder einem Eingang der Bremswert-Steuereinrichtung (9, 10, 17, 14, 15) verbunden, dieser also vorgeschaltet.

Die Bremswert-Steuereinrichtung (9, 10, 17, 14, 15) besteht aus einer Steuerelektronik (9), die eingangsseitig mit dem Ausgang der Vergleichseinrichtung (8) verbunden ist, elektrisch gesteuerten Druckmodulatoren (10, 17) und Bremswertsensoren (14, 15). Die Druckmodulatoren (10, 17) sind der Steuerelektronik (9) elektrisch nachgeschaltet und kontrollieren jeweils die Verbindung einer der Bremsen (13, 16) mit dem Druckmittelvorrat (18). Die Bremswertsensoren (14, 15) messen den bei Druckbeaufschlagung an der jeweils zugeordneten Bremse (13 bzw. 16) entstehenden Bremswert und geben ein entsprechendes elektrisches drittes Bremswertsignal an die Steuerelektronik (9) ab.

Die Vergleichseinrichtung (8) ist derart ausgebildet, daß sie entweder das erste Bremswertsignal oder das zweite Bremswertsignal zu ihrem mit der Bremswert-Steuereinrichtung (9, 10, 17, 14, 15) verbundenen Ausgang durchsteuern kann. Anstelle des jeweiligen Bremswertsignals selbst kann die Vergleichseinrichtung (8) auch ein davon abhängiges Signal durchsteuern, welche Möglichkeit im folgenden auch ohne ausdrückliche Erwähnung immer mit erfaßt sein soll.

In der bisher beschriebenen Grundausführung funktioniert das Ausführungsbeispiel wie folgt.

Bei einer Betätigung des Bremswertgebers (20) öffnet dieser zur Erzeugung des Drucksignals in seinem Druckmittelteil (21) eine Verbindung zwischen dem Druckmittelvorrat (19) und den Bremsen (1, 2). Infolge der Druckzufuhr entsteht im elektrischen Teil (4) das erste Bremswertsignal und an den Bremsen (1, 2) ein Bremswert, den der Bremswertsensor (3) mißt und in das zweite Bremswertsignal umsetzt. Dieses zweite Bremswertsignal wie auch das erste Bremswertsignal werden der Vergleichseinrichtung (8) zugeführt, welche im Normalbetrieb das zweite Bremswertsignal als Steuersignal zu der Bremswert-Steuereinrichtung (9, 10, 17, 14, 15), genauer: zu der Steuerelektronik (9), durchsteuert.

Die Steuerelektronik (9) gibt bei Erhalt dieses Steuersignals zu den Druckmodulatoren (10, 17) ein oder für jeden Druckmodulator (10 bzw. 17) ein eigenes davon abhängiges Signal ab; die Druckmodulatoren (10, 17) lassen daraufhin bis zum Abfall dieses Signals Druck aus dem Druckmittelvorrat (18) als Bremsdruck zu den Bremsen (13, 16) durch, an denen daraufhin ebenfalls jeweils ein Bremswert entsteht. Der Abfall des Signals tritt ein, wenn die Steuerelektronik (9) Gleichheit zwischen den dritten Bremswertsignalen und dem ihr von der Vergleichseinrichtung (8) zugeführten Steuersignal feststellt. Die Bremswert-Steuereinrichtung (9, 10, 17, 14, 15) bildet also einen Regelkreis für die Bremswerte der Bremsen (13, 16).

Als Bremswert kommt jede geeignete, die momentane Belastung der Bremsen (1, 2 bzw. 13, 16) kennzeichnende, Größe in Betracht. Bevorzugt werden als Bremswert das Bremsmoment (bzw. die Bremskraft) oder die Bremstemperatur, welche die jeweiligen Bremsen infolge der Bremsdruckzufuhr erzeugen bzw. annehmen, aber auch der Bremsdruck selbst, herangezogen. Entsprechend sind die Bremswertsensoren (3, 14 und 15) als Bremsmoment-(Bremskraft-) Sensoren oder Temperatursensoren oder Drucksensoren ausgebildet.

In einem Ausnahmebetrieb steuert die Vergleichseinrichtung (8) das (von dem Bremswertgeber 20 abgegebene) erste Bremswertsignal durch, welches dann im elektrisch gesteuerten Bremskreis (II) die soeben beschriebenen Wirkungen auslöst. Der Ausnahmebetrieb kommt in erster Linie bei Ausfall des druckmittelgesteuerten Bremskreises (I) in Betracht. Der elektrisch gesteuerte Bremskreis (II) bleibt in diesem Fall voll funktionsfähig. Andererseits bleibt auch der druckgesteuerte Bremskreis (I) bei Ausfall des elektrisch gesteuerten Bremskreises (II) voll funktionsfähig. Es kann lediglich vorkommen, daß infolge von Toleranzen unter anderem die Bremswerte in den beiden Bremskreisen (I bzw. II) stärker als im Normalbetrieb üblich voneinander abweichen. Da das Ausführungsbeispiel nur handelsübliche und wenig aufwendige Geräte und Komponenten umfaßt, verkörpert es eine mit geringem Aufwand ausführbare vollwertige Mehrkreis-Bremsanlage.

Insbesondere aus der Funktionsbeschreibung geht hervor, daß in dem Ausführungsbeispiel ein Verfahren zur Steuerung wenigstens eines elektrisch gesteuerten Bremskreises realisiert wird, welches sich dadurch auszeichnet, daß der Bremswert des durch das Drucksignal gesteuerten Bremskreises gemessen und in ein elektrisches zweites Bremswertsignal umgesetzt wird und daß der elektrisch gesteuerte Bremskreis im Normalbetrieb von dem zweiten Bremswertsignal und in einem Ausnahmebetrieb von dem ersten Bremswertsignal wenigstens mitgesteuert wird. Auf den Gesichtspunkt der "Mitsteuerung" wird weiter unten näher eingegangen.

Aus der Funktionsbeschreibung geht auch hervor, daß der elektrisch gesteuerte Bremskreis (II) dem druckgesteuerten Bremskreis (I) folgt. Der aufgrund seiner elektrischen Steuerung potentiell schnellere Bremskreis (II) wird dadurch zwar verlangsamt, dies geschieht jedoch zugunsten einer Anpassung an den Bremskreis (I), mit dem bereits eingangs erwähnten Vorteil, daß Druckgleichlauf in den Bremskreisen (I und II) sichergestellt ist.

Über die bisher beschriebenen Grundausführung hinaus kann das Ausführungsbeispiel auf vielfältige Arten, von denen einige in Fig. 1 gestrichelt angedeutet sind, fortgebildet werden.

Mit (11 bzw. 12) sind beispielhaft Sensoren bezeichnet, die bestimmte Fahrzeugparameter erfassen und in elektrische Signale umsetzen. Diese Sensoren sind mit Eingängen der Steuerelektronik (9) elektrisch verbunden. Die Steuerelektronik (9) ist in diesem Fall derart ausgebildet, daß sie aus dem von der Vergleichseinrichtung (8) zugeführten Steuersignal und den Signalen der Sensoren (11, 12) ein korrigiertes Signal bzw. korrigierte Signale für die Druckmodulatoren (10, 17) bildet und dieses bzw. diese abschaltet, wenn sie Gleichheit zwischen den (von den Bremswertsensoren 14, 15 stammenden) dritten Bremswertsignalen und diesem bzw. diesen korrigierten Signal(en) feststellt. Die an den Bremsen (13, 16) entstehenden Bremswerte hängen in diesem Fall also nicht nur von dem von der Vergleichseinrichtung (8) stammenden Steuersignal, sondern auch von den durch die Sensoren (11, 12) erfaßten Fahrzeugparametern ab. Mit anderen Worten: In dieser Ausgestaltung wird der elektrisch gesteuerte Bremskreis (II) von dem zweiten Bremswertsignal (vom Bremswertsensor 3 stammend) bzw. von dem ersten Bremswertsignal (vom Bremswertgeber 20 stammend) "nur" mitgesteuert. In diesem Zusammenhang kommt als Fahrzeugparameter jede für das Fahrzeugverhalten beim Bremsen relevante Fahrzeugeigenschaft in Betracht. Beispielhaft genannt seien der Beladungszustand des Fahrzeugs und/oder der Beladungszustand der dem elektrisch gesteuerten Bremskreis (II) zugeordneten Achse(n), die Fahrzeuggeschwindigkeit, die Kraft in der Kupplung zwischen Zugfahrzeug und Anhänger, usw.

Mit (6) ist eine Einrichtung zur Erkennung der dem Bremswertgeber (20) zugeführten Betätigungskraft und/oder zur Erkennung seines Betätigungsweges vorgesehen. Diese Einrichtung (6) ist so ausgebildet, daß sie ein Bremswertbedarfssignal abgibt, wenn sie das Überschreiten eines vorbestimmten Mindestwertes der Betätigungskraft und/oder des Betätigungsweges feststellt. Das Bremswertbedarfssignal wird der Vergleichseinrichtung (8) zugeführt, welche in diesem Fall so ausgebildet ist, daß sie bei Erhalt des Bremswertbedarfssignals das (von dem Bremswertgeber 20 stammende) erste Bremswertsignal als Steuersignal durchsteuert. In dieser Ausgestaltung wird also der Übergang zwischen Normalbetrieb und Ausnahmebetrieb durch die Größe der dem Bremswertgeber (20) zugeführten Betätigungskraft und/ oder dessen Betätigungswegs bestimmt.

Mit (5) ist eine Einrichtung zur Erkennung der Betätigungsgeschwindigkeit des Bremswertgebers (20) bezeichnet, die anstelle der Einrichtung (6) oder zusätzlich zu dieser vorgesehen werden kann. Die Einrichtung (5) ist so ausgebildet, daß sie ein Geschwindigkeitssignal abgibt, wenn sie das Überschreiten einer vorbestimmten Mindestgeschwindigkeit feststellt. Das Geschwindigkeitssignal wird der Vergleichseinrichtung (8) zugeführt, die in diesem Falle derart ausgebildet ist, daß sie bei Erhalt des Geschwindigkeitssignals das erste Bremswertsignal durchsteuert. In dieser Ausgestaltung wird der Übergang zwischen Normalbetrieb und Ausnahmebetrieb durch die Größe der Betätigungsgeschwindigkeit des Bremswertgebers bestimmt.

In nicht näher dargestellter Weise kann die Vergleichseinrichtung (8) auch so ausgebildet sein, daß sie das erste Bremswertsignal und das zweite Bremswertsignal miteinander vergleicht und bei Feststellung einer vorbestimmten unzulässigen Abweichung ein Warnsignal abgibt. Eine solche unzulässige Abweichung kann auf Kennlinienfehlern oder Funktionsstörungen des Bremswertsensors (3) und/oder des elektrischen Teils (4) des Bremswertgebers (20), aber auch auf einem Ausfall des druckgesteuerten Bremskreises (I), in welchem Fall in diesem kein oder nur ein zu geringer Bremswert entsteht, beruhen.

Ist die Vergleichseinrichtung (8) das erste Bremswertsignal und das zweite Bremswertsignal vergleichend ausgebildet, so kann sie, statt wie soeben beschrieben oder zusätzlich, derart ausgebildet sein, daß sie bei Feststellung der vorbestimmten zulässigen Abweichung das erste Bremswertsignal durchsteuert, also auf Ausnahmebetrieb umschaltet. Dadurch ist sichergestellt, daß beim Ausfall des druckgesteuerten Bremskreises (I) der elektrisch gesteuerte Bremskreis (II) voll funktionsfähig bleibt.

Mit (7) ist eine Abstimmeinrichtung für das erste Bremswertsignal bezeichnet, mit deren Hilfe das erste Bremswertsignal an das zweite Bremswertsignal ganz oder wenigstens angenähert angeglichen werden kann, wenn die Vergleichseinrichtung (8) eine Abweichung zwischen den Bremswertsignalen feststellt. Die Vergleichseinrichtung ist in diesem Falle derart ausgebildet, daß sie im Normalbetrieb bei Feststellung der Abweichung zwischen den Bremswertsignalen ein Steuersignal an die Abstimmeinrichtung (7) abgibt, von welchem diese in bekannter und deshalb nicht näher beschriebener Weise zweckentsprechend aktiviert wird. Da dies nur im Normalbetrieb erfolgt, können mit der Abstimmeinrichtung (7) Kennlinienfehler bzw. Funktionsstörungen des Bremswertsensors (3) oder des elektrischen Teils (4) des Bremswertgebers (20), deren Auswirkungen unterhalb der bereits genannten zulässigen Abweichung liegen, im wesentlichen oder ganz beseitigt oder ausgeglichen werden.

In nicht näher dargestellter Weise kann die soeben beschriebene Ausgestaltung dahin fortgebildet werden, daß die Vergleichseinrichtung das Abstimmsignal nur abgibt, wenn die festgestellte Abweichung zwischen den Bremswertsignalen wenigstens einen vorbestimmten Toleranzwert erreicht. Dadurch werden eine Aktivierung der Abstimmeinrichtung (7) bei jeder geringfügigen Abweichung sowie ein erhöhter Aufwand für die Abstimmeinrichtung (7) bzw. die Vergleichseinrichtung (8) vermieden.

In den Ausgestaltungen des Ausführungsbeispiels mit Abstimmeinrichtung (7) und Einrichtung (5) zur Erkennung der Betätigungsgeschwindigkeit des Bremswertgebers (20) kann die Einrichtung (5) derart ausgebildet sein, daß sie ein Einschaltsignal abgibt, solange die Betätigungsgeschwindigkeit einen vorbestimmten Höchstwert nicht überschreitet. Das Einschaltsignal wird der Vergleichseinrichtung (8) zugeführt, die in diesem Falle derart ausgebildet ist, daß sie das Abstimmsignal (an die Abstimmeinrichtung (7)) nur abgibt, wenn sie gleichzeitig die Abweichung der Bremswertsignale, gegebenenfalls zwischen dem vorbestimmten Toleranzwert und der zulässigen Abweichung, feststellt und das Einschaltsignal empfängt. Bei entsprechender Festlegung des Höchstwerts (der Betätigungsgeschwindigkeit des Bremswertgebers 20) stellt diese Ausgestaltung sicher, daß die Abstimmeinrichtung (7) nur bei geringen Betätigungsgeschwindigkeiten des Bremswertgebers (20) aktiviert wird, bei denen ein synchroner Lauf von Drucksoll- und Bremswert möglich ist.

Um Verzögerungen des Bremswertverlaufs des elektrisch gesteuerten Bremskreises (II) gegenüber dem druckgesteuerten Bremskreis (I) bei der beschriebenen Folgeregelung zu reduzieren, kann es zweckmäßig sein, bei einer Bremsbetätigung schon aufgrund des Ansprechens des ersten Bremswertsignals sofort einen Bremsdruck etwa in Höhe des Ansprechdruckes (bzw. Anlegedruckes) der Bremsen (13, 16) des elektrisch gesteuerten Bremskreises (II) auszusteuern und erst dann die Folgeregelung wie zuvor beschrieben wirken zu lassen.

In dem Ausführungsbeispiel nach Fig. 2 dient als Bremswert der den Bremsen (1, 2) bzw. (13, 16) zugeführte Bremsdruck. Dementsprechend sind die hier mit (30, 31, 32) bezeichneten Bremswertsensoren als Drucksensoren ausgebildet. Die Bremswertsensoren (31, 32) des elektrisch gesteuerten Bremskreises (II) sind als getrennte Baugruppen gezeichnet, können aber auch in den jeweils zugeordneten Druckmodulator (10 bzw. 17) integriert sein.

Die Bremswertsensoren (31, 32) sind außer mit der Steuerelektronik (9) auch mit der Vergleichseinrichtung (8) verbunden.

Der Sensor (11) erfaßt den Beladungszustand des Fahrzeugs und/oder den Beladungszustand der dem elektrisch gesteuerten Bremskreis (II) zugeordneten einen Achse oder mehreren Achsen. Das Signal des Sensors (11), im folgenden mit Lastsignal bezeichnet, wird außer der Steuerelektronik (9) auch der Vergleichseinrichtung (8) zugeführt.

In die Vergleichseinrichtung (8) ist ein Kennfeld eingespeichert, welches jedem Lastsignal eine Soll-Abweichung zwischen dem zweiten Bremswertsignal und dem dritten Bremswertsignal zuordnet. Die Soll-Abweichung kann mit der Stärke eines Bremswertsignals oder der Bremswertsignale variabel sein. Die Vergleichseinrichtung (8) ist ferner in nicht näher dargestellter Weise derart ausgebildet, daß sie ein Warnsignal abgibt, wenn sie feststellt, daß die vorhandene IST-Abweichung die dem gerade anliegenden Lastsignal (und, gegebenenfalls, der Stärke des bzw. der Bremswertsignale) zugeordnete Soll-Abweichung wenigstens um einen zulässigen Toleranzwert über- oder unterschreitet. Mit dem zulässigen Toleranzwert ist aus den gleichen Gründen wie oben in Verbindung mit dem Abstimmsignal angegeben, eine Ansprechschwelle für die Abgabe des Warnsignals vorgesehen. Im äußersten Fall können dieser zulässige Toleranzwert auf Null gesetzt und damit eine sofortige Abgabe des Warnsignals bei jeglichem Über- oder Unterschreiten der Soll-Abweichung bewirkt werden.

Aufgrund seiner Wirkungsweise realisiert das Ausführungsbeispiel nach Fig. 2 ein Verfahren zur Steuerung wenigstens eines elektrisch gesteuerten Bremskreises, bei dem der Bremswert des elektrisch gesteuerten Bremskreises gemessen und in ein elektrisches drittes Bremswertsignal umgesetzt wird und bei dem beim Über- oder Unterschreiten einer beladungsabhängigen Soll-Abweichung zwischen dem zweiten Bremswertsignal und dem dritten Bremswertsignal wenigstens um einen zulässigen Toleranzwert eine Warnung erfolgt.

Dieses Ausführungsbeispiel ermöglicht damit eine Überprüfung des Bremswertsensors (30) des druckgesteuerten Bremskreises (I) anhand der Bremswertsensoren (31, 32) des elektrisch gesteuerten Kreises und damit eine wenig aufwendige Möglichkeit, die beschriebene Mehrkreis-Bremsanlage erhöhten Sicherheitsbedürfnissen anzupassen.

Das Ausführungsbeispiel nach Fig. 2 zeigt noch, daß im druckgesteuerten Bremskreis (I) die Steuerung des Bremsdrucks der Bremsen (1, 2) über ein Relaisventil (34) erfolgt, dem das von dem Bremswertgeber (20) abgegebene Drucksignal als Steuerdruck zugeführt wird.

Im übrigen entspricht das Ausführungsbeispiel nach Fig. 2 demjenigen nach Fig. 1.

Dadurch, daß in den Ausführungsbeispielen jeder der Bremsen (13, 16) ein eigener Druckmodulator (10 bzw. 17) und ein eigener Bremswertsensor (14 bzw. 15; 31 bzw. 32) zugeordnet sind, kann der Bremswert jeder Bremse (13 bzw 16), wenn die Steuerelektronik (9) für jeden Druckmodulator (10 bzw. 17) ein eigenes Signal abgibt, individuell geregelt werden. Unter Verzicht auf Bremskomfort können aber in nicht dargestellter Weise den Bremsen (13, 16) nur ein Druckmodulator und nur ein Bremswertsensor zugeordnet werden mit entsprechender Vereinfachung der Steuerelektronik, wodurch sich eine kostengünstige Lösung ergibt. Der Fachmann erkennt, daß für eine so vereinfachte Ausgestaltung die vorstehenden Ausführungen entsprechend mitgelten.

Es liegt auf der Hand, daß in nicht dargestellter Weise die Ausführungsbeispiele um einen oder mehrere zusätzliche elektrisch gesteuerte und/oder druckgesteuerte Bremskreise erweitert werden können. Dabei gelten für den oder die zusätzlichen elektrisch gesteuerten Bremskreise die vorstehenden Ausführungen zum Aufbau des elektrisch gesteuerten Bremskreises (II) sowie dessen Koppelung an den druckgesteuerten Bremskreis (I) oder einen anderen druckgesteuerten Bremskreis entsprechend.

Der Fachmann erkennt ferner, daß die vorstehend zu den einzelnen Ausführungsbeispielen gegebenen Erläuterungen für das andere Ausführungsbeispiel in entsprechender Weise mitgelten, sofern sich aus diesen Erläuterungen nichts Widersprechendes ergibt.

Schließlich erkennt der Fachmann, daß sich der Schutzbereich der vorliegenden Erfindung nicht in den Ausführungsbeispielen erschöpft, sondern alle Ausgestaltungen erfaßt, deren Merkmale sich den Patentansprüchen unterordnen. Insbesondere sollen alle Ausgestaltungen miterfaßt sein, in denen zwei oder mehrere der erfindungswesentlichen elektrischen Bauteile in einer oder mehreren Baugruppe(n) zusammengefaßt sind.

## Patentansprüche

1. Verfahren zur Steuerung wenigstens eines elektrisch gesteuerten Bremskreises (II) einer Mehrkreis-Bremsanlage mit druckmittelbetätigten Bremsen (1, 2; 13, 16), welche die Merkmale aufweist:

    a) Die Mehrkreis-Bremsanlage weist einen Bremswertgeber (20) auf, der wenigstens ein elektrisches erstes Bremswertsignal und wenigstens ein Drucksignal abgibt;
    b) die Mehrkreis-Bremsanlage weist wenigstens den einen elektrisch gesteuerten Bremskreis (II) und wenigstens einen durch das Drucksignal gesteuerten Bremskreis (I) auf;
    c) der Bremswertgeber (20) ist derart ausgebildet, daß die Stärken des ersten Bremswertsignals und des Drucksignals von der zugeführten Betätigungskraft und/oder dem Betätigungsweg abhängen;
    d) Bremswert ist eine die momentane Belastung der Bremsen (1, 2 bzw. 13, 16) des jeweiligen Bremskreises (I bzw. II) kennzeichnende Größe, z.B. Bremsdruck, Bremsmoment, Bremstemperatur,

    dadurch gekennzeichnet, daß der Bremswert des durch das Drucksignal gesteuerten Bremskreises (I) gemessen und in ein elektrisches zweites Bremswertsignal umgesetzt wird und daß der elektrisch gesteuerte Bremskreis (II) im Normalbetrieb von dem zweiten Bremswertsignal und in einem Ausnahmebetrieb von dem ersten Bremswertsignal wenigstens mitgesteuert wird.

2. Anordnung zur Steuerung wenigstens eines elektrisch gesteuerten Bremskreises (II) einer Mehrkreis-Bremsanlage mit druckmittelbetätigten Bremsen (1, 2; 13, 16), welche die Merkmale aufweist:
   a) Die Mehrkreis-Bremsanlage weist einen Bremswertgeber (20) auf, der wenigstens ein elektrisches erstes Bremswertsignal und wenigstens ein Drucksignal abgibt;
   b) die Mehrkreis-Bremsanlage weist wenigstens den einen elektrisch gesteuerten Bremskreis (II) und wenigstens einen durch das Drucksignal gesteuerten Bremskreis (I) auf;
   c) der Bremswertgeber (20) ist derart ausgebildet, daß die Stärken des ersten Bremswertsignals und des Drucksignals von der zugeführten Betätigungskraft und/oder dem Betätigungsweg abhängen;
   d) der elektrisch gesteuerte Bremskreis (II) weist eine elektrische Bremswert-Steuereinrichtung (9, 10, 17, 14, 15; 9, 10, 17, 31, 32) auf;
   e) Bremswert ist eine die momentane Belastung der Bremsen (1, 2 bzw. 13, 16) des jeweiligen Bremskreises (I bzw. II) kennzeichnende Größe, z.B. Bremsdruck, Bremsmoment, Bremstemperatur,
   gekennzeichnet durch die Merkmale:
   f) An dem durch das Drucksignal gesteuerten Bremskreis (I) ist ein dessen Bremswert messender und diesen in das zweite Bremswertsignal umsetzender Bremswertsensor (3; 30) angeordnet;
   g) es ist eine Vergleichseinrichtung (8) vorgesehen, der eingangsseitig die Bremswertsignale zugeführt werden und die ausgangsseitig ein Steuersignal an die Bremswert-Steuereinrichtung (9, 10, 17, 14, 15; 9, 10, 17, 31, 32) abgibt;
   h) die Vergleichseinrichtung (8) ist derart ausgebildet, daß sie als Steuersignal im Normalbetrieb das zweite Bremswertsignal und im Ausnahmebetrieb das erste Bremswertsignal oder ein davon jeweils abhängiges Signal durchsteuert.

3. Verfahren nach Anspruch 1, dadurch gekennzeichnet, daß eine einen vorbestimmten Mindestwert überschreitende Betätigungskraft und/oder ein einen vorbestimmten Mindestwert überschreitender Betätigungsweg des Bremswertgebers (20) den Ausnahmebetrieb bestimmt.

4. Verfahren nach Anspruch 1, dadurch gekennzeichnet, daß bei Beginn einer Bremsbetätigung der elektrisch gesteuerte Bremskreis (II) bis zum Aufbau des Ansprechdrucks in den zugeordneten Bremsen (13, 16) im Ausnahmebetrieb betrieben wird.

5. Verfahren nach einem der Ansprüche 1 oder 3 bis 4, dadurch gekennzeichnet, daß eine einen vorbestimmten Mindestwert überschreitende Betätigungsgeschwindigkeit des Bremswertgebers (20) den Ausnahmebetrieb bestimmt.

6. Verfahren nach einem der Ansprüche 1 oder 3 bis 5, wobei als Bremswert der Bremsdruck dient und wobei die Mehrkreis-Bremsanlage eine Einrichtung zur Erfassung des Beladungszustands des mit der Mehrkreis-Bremsanlage ausgerüsteten Fahrzeugs und/oder der dem elektrisch gesteuerten Bremskreis (II) zugeordneten wenigstens einen Achse aufweist, dadurch gekennzeichnet, daß der Bremswert des elektrisch gesteuerten Kreises (II) gemessen und in ein elektrisches drittes Bremswertsignal umgesetzt wird und daß bei Über- oder Unterschreiten einer beladungsabhängigen Soll-Abweichung zwischen dem zweiten Bremswertsignal und dem dritten Bremswertsignal wenigstens um einen zulässigen Toleranzwert eine Warnung erfolgt.

7. Anordnung nach Anspruch 2, gekennzeichnet durch die Merkmale:
   a) Es ist eine Einrichtung (6) zur Erkennung der dem Bremswertgeber (20) zugeführten Betätigungskraft und/oder zur Erkennung seines Betätigungswegs vorgesehen, die bei Überschreiten eines vorbestimmten Mindestwertes der Betätigungskraft und/oder des Betätigungswegs ein Bremswertbedarfssignal abgibt, welches der Vergleichseinrichtung (8) zugeführt wird;
   b) die Vergleichseinrichtung (8) ist so ausgebildet, daß sie bei Erhalt des Bremswertbedarfssignals das erste Bremswertsignal bzw. das davon abhängige Signal durchsteuert.

8. Anordnung nach einem der Ansprüche 2 oder 7 gekennzeichnet durch die Merkmale:
   a) Es ist eine Einrichtung (5) zur Erkennung der Betätigungsgeschwindigkeit des Bremswertgebers (20) vorgesehen, die bei Überschreiten eines vorbestimmten Mindestwertes ein Geschwindigkeitssignal an die Vergleichseinrichtung (8) abgibt;
   b) die Vergleichseinrichtung (8) ist derart ausgebildet, daß sie bei Erhalt des Geschwindigkeitssignals das erste Bremswertsignal bzw. das davon abhängige Signal durchsteuert.

9. Anordnung nach einem der Ansprüche 2 oder 7 bis 8, dadurch gekennzeichnet, daß die Vergleichseinrichtung (8) derart ausgebildet ist, daß sie bei einer vorbestimmten unzulässigen Abweichung zwischen dem ersten Bremswertsignal und dem zweiten Bremswertsignal ein Warnsignal abgibt.

10. Anordnung nach einem der Ansprüche 2 oder 7 bis 9, dadurch gekennzeichnet, daß die Vergleichseinrichtung (8) derart ausgebildet ist, daß sie bei einer vorbestimmten unzulässigen Abweichung zwischen dem ersten Bremswertsignal und dem zweiten Bremswertsignai das erste Bremswertsignal bzw. das davon abhängige Signal durchsteuert.

11. Anordnung nach einem der Ansprüche 2 oder 7 bis 10, gekennzeichnet durch die Merkmale:
a) Es ist eine Abstimmeinrichtung (7) für das erste Bremswertsignal vorgesehen;
b) die Vergleichseinrichtung (8) ist derart ausgebildet, daß sie im Normalbetrieb bei einer Abweichung zwischen dem ersten Bremswertsignal und dem zweiten Bremswertsignal ein Steuersignal an die Abstimmeinrichtung (7) zwecks wenigstens angenäherter Beseitigung der Abweichung abgibt.

12. Anordnung nach Anspruch 11, dadurch gekennzeichnet, daß die Vergleichseinrichtung (8) derart ausgebildet ist, daß sie das Abstimmsignal abgibt, wenn die Abweichung zwischen einem vorbestimmten Toleranzwert und der vorbestimmten unzulässigen Abweichung liegt.

13. Anordnung nach einem der Ansprüche 11 oder 12, gekennzeichnet durch die Merkmale:
a) Es ist eine Einrichtung (5) zur Erkennung der Betätigungsgeschwindigkeit des Bremswertgebers (20) vorgesehen, die an die Vergleichseinrichtung (8) ein Einschaltsignal abgibt, solange die Betätigungsgeschwindigkeit einen vorbestimmten Höchstwert nicht überschreitet;
b) die Vergleichseinrichtung (8) ist derart ausgebildet, daß sie zur Abgabe des Abstimmsignals auch des Empfangs des Einschaltsignals bedarf.

14. Anordnung nach einem der Ansprüche 2 oder 7 bis 8, in der als Bremswert der Bremsdruck dient, gekennzeichnet durch die Merkmale:
a) Es ist ein Lastsensor (11) vorgesehen, dessen Lastsignal der Vergleichseinrichtung (8) zugeführt wird;
b) an dem elektrisch gesteuerten Bremskreis (II) ist wenigstens ein dessen Bremsdruck messender Drucksensor als Bremswertsensor (31, 32) angeordnet, der das von dem Bremsdruck abhängige dritte Bremswertsignal an die Vergleichseinrichtung (8) abgibt;
c) die Vergleichseinrichtung (8) ist derart ausgebildet, daß sie einem eingespeicherten Kennfeld abhängig von dem Lastsignal die Soll-Abweichung zwischen dem zweiten Bremswertsignal und dem dritten Bremswertsignal entnimmt und ein Warnsignal abgibt, wenn die IST-Abweichung die Soll-Abweichung wenigstens um den zulässigen Toleranzwert überoder unterschreitet.

**Claims**

1. A method for the control of at least one electrically controlled brake circuit (II) of a multicircuit brake system with pressure medium-operated brakes (1, 2,; 13, 16), which has the following features:
a) the multi-circuit brake system has a braking value transducer (20) which emits at least one electrical first braking value signal and at least one pressure signal;
b) the multi-circuit brake system has at least the one electrically controlled brake circuit (II) and at least one brake circuit (I) controlled by the pressure signal;
c) the braking value transducer (20) is constructed so that the strengths of the first braking value signal and the pressure signal are dependent on the applied actuation force and/or the actuation stroke;
d) the braking value is a variable representing the momentary loading of the brakes (1, 2 and 13, 16) of the respective brake circuit (I, II), for example brake pressure, braking torque, brake temperature,
characterized in that the braking value of the brake circuit (I) controlled by the pressure signal is measured and converted into an electrical second braking value signal, and the electrically controlled brake circuit (II) is controlled in normal operation by the second braking value signal and in an emergency mode is controlled at least concomitantly by the first braking value signal.

2. An arrangement for controlling at least one electrically controlled brake circuit (II) of a multi-circuit brake system with pressure medium-operated brakes (1, 2; 13, 16), which has the following features:

a) the multi-circuit brake system has a braking value transducer (20) which emits at least one electrical first braking value signal and at least one pressure signal;

b) the multi-circuit brake system has at least the one electrically controlled brake circuit (II) and at least one brake circuit (I) controlled by the pressure signal;

c) the braking value transducer (20) is constructed so that the strengths of the first braking value signal and the pressure signal are dependent on the applied actuating force and/or the actuation stroke;

d) the electrically controlled brake circuit (II) has an electrical braking value control means (9, 10, 17, 14, 15; 9, 10, 17, 31, 32);

e) the braking value is a variable representing the momentary loading of the brakes (1, 2 and 13, 16) of the respective brake circuit (I, II), for example brake pressure, braking torque, brake temperature,

characterized by the features:

f) a braking value sensor (3; 30) measuring the braking value of the brake circuit (I) and converting this into the second braking value signal is arranged in the brake circuit (I) controlled by the pressure signal;

g) a comparator (8) is provided, to the input of which braking value signals are fed and the output of which emits a control signal to the braking value control means (9, 10, 17, 14, 15; 9, 10, 17, 31, 32);

h) the comparator (8) is constructed so that in normal operation it relays the second braking value as control signal and in emergency mode it relays the first braking value signal or a signal dependent thereon as control signal.

3. A method according to claim 1, characterized in that an actuation force of the braking value transducer (20) exceeding a predetermined minimum value and/or an actuation stroke of the braking value transducer (20) exceeding a predetermined minimum value determines the emergency mode.

4. A method according to claim 1, characterized in that at the start of a brake actuation the electrically controlled brake circuit (II) is operated in emergency mode until the build-up of the response pressure in the associated brakes (13, 16).

5. A method according to one of claims 1 or 3 to 4, characterized in that an actuation speed of the braking value transducer (20) exceeding a predetermined minimum value determines the emergency mode.

6. A method according to one of claims 1 or 3 to 5, in which the brake pressure serves as braking value and in which the multi-circuit brake system has a device for detecting the laden state of the vehicle equipped with the multi-circuit brake system and/or of at least one axle associated with the electrically controlled brake circuit (II), characterized in that the braking value of the electrically controlled circuit (II) is measured and converted into an electrical third braking value signal and a warning is given when a load-dependent desired variation between the second braking value signal and the third braking value signal is exceeded or fallen below at least by an admissible tolerance value.

7. An arrangement according to claim 2, characterized by the following features:

a) a device (6) for detecting the actuating force applied to the braking value transducer (20) or for detecting its actuation stroke is provided, which emits a braking value demand signal when a predetermined minimum value of the actuating force and/or of the actuation stroke is exceeded, which signal is fed to the comparator (8);

b) the comparator (8) is constructed so that on receiving the braking value demand signal it passes on the first braking value signal or the signal dependent thereon.

8. An arrangement according to one of claims 2 or 7, characterized by the following features:

a) a device (5) for detecting the actuation speed of the braking value transducer (20) is provided, which emits a speed signal to the comparator (8) when a predetermined minimum value is exceeded;

b) the comparator (8) is constructed so that on receiving the speed signal it passes on the first braking value signal or the signal dependent thereon.

9. An arrangement according to one of claims 2 or 7 to 8, characterized in that the comparator (8) is constructed so that it emits a warning signal in the event of a predetermined inadmissible variation between the first braking value signal and the second braking value signal.

10. An arrangement according to one of claims 2 or 7 to 9, characterized in that the comparator (8) is constructed so that it passes on the first braking value signal or the signal dependent thereon in the event of a predetermined inadmissible variation between the first braking value signal and the second braking value signal.

11. An arrangement according to one of claims 2 or 7 to 10, characterized by the following features:

a) an adjusting device (7) is provided for the first braking value signal;

b) the comparator (8) is constructed so that in normal operation, in the event of a variation between the first braking value signal and the second braking value signal it emits a control signal to the adjusting device (7) for the purpose of an at least approximate elimination of the variation.

12. An arrangement according to claim 11, characterized in that the comparator (8) is constructed so that it emits the adjusting signal whenever the variation lies between a predetermined tolerance value and the predetermined inadmissible variation.

13. An arrangement according to one of claims 11 or 12, characterized by the following features:

a) a device (5) for detecting the actuation speed of the braking value transducer (20) is provided, which emits an ON signal to the comparator (8) as long as the actuation speed does not exceed a predetermined maximum value;

b) the comparator (8) is constructed so that it requires the receipt of the ON-signal to emit the adjusting signal.

14. An arrangement according to one of claims 2 or 7 to 8, in which the brake pressure serves as braking value, characterized by the following features:

a) a load sensor (11) is provided, the load signal of which is fed to the comparator (8);

b) in the electrically controlled brake circuit (II) there is arranged at least one pressure sensor as brake value sensor (31, 32) measuring the brake pressure thereof, which supplies the third braking value signal dependent on the brake pressure to the comparator (8);

c) the comparator (8) is constructed so that it derives the desired variation between the second braking value signal and the third braking value signal from a stored family of characteristics and emits a warning signal whenever the actual variation exceeds or falls below the desired variation at least by the admissible tolerance value.

## Revendications

1. Procédé pour commander au moins un circuit de freinage (II) commandé électriquement appartenant à une installation de freinage à plusieurs circuits ayant des freins actionnés par fluide de pression (1, 2; 13, 16), présentant les caractéristiques suivantes :

a) l'installation de freinage à plusieurs circuits présente un émetteur de valeur de freinage (20) qui délivre au moins un premier signal électrique de valeur de freinage et au moins un signal de pression;

b) l'installation de freinage à plusieurs circuits présente au moins un circuit de freinage commandé électriquement (II) et au moins un circuit de freinage (I) commandé par le signal de pression;

c) l'émetteur de valeur de freinage (20) est conçu-réalisé de manière que les intensités du premier signal de valeur de freinage et du signal de pression dépendent de la force d'actionnement appliquée et/ou de la course d'actionnement;

d) la valeur de freinage est une grandeur, par exemple pression de freinage, couple de freinage, température de freinage, caractérisant la charge momentanée des freins (1, 2; respectivement 13, 16) du circuit de freinage concerné (I; respectivement II),

caractérisé par le fait que la valeur de freinage du circuit de freinage (I) commandé par le signal de pression est mesurée et convertie en un deuxième signal électrique de valeur de freinage et par le fait qu'en marche normale le circuit de freinage commandé électriquement (II) est au moins co-commandé par le deuxième signal de valeur de freinage et, en marche exceptionnelle, est au moins co-commandé par le premier signal de valeur de freinage.

2. Dispositif pour commander au moins un circuit de freinage (II) commandé électriquement appartenant à une installation de freinage à plusieurs circuits avec freins actionnés par fluide de pression (1, 2; 13, 16), ce dispositif présentant les caractéristiques suivantes :

a) l'installation de freinage à plusieurs circuits présente un émetteur de valeur de freinage (20) qui délivre au moins un premier signal électrique de valeur de freinage et au moins un signal de pression;

b) l'installation de freinage à plusieurs circuits présente au moins un circuit de freinage commandé électriquement (II) et au moins un circuit de freinage (I) commandé par le signal de pression;

c) l'émetteur de valeur de freinage (20) est conçu-réalisé de manière que les intensités du premier signal de valeur de freinage et du signal de pression dépendent de la force d'actionnement appliquée et/ou de la course d'actionnement;

d) le circuit de freinage commandé électriquement (II) présente un dispositif électrique de commande de valeur de freinage (9, 10, 17, 14, 15; 9, 10, 17, 31, 32);

e) la valeur de freinage est une grandeur, par exemple pression de freinage, couple de freinage, température de freinage, caractérisant la charge momentanée des freins (1, 2; respectivement 13, 16) du circuit de freinage concerné (I; respectivement II),

caractérisé par les caractéristiques suivantes :

f) au circuit de freinage (I) commandé par le signal de pression est associé un capteur de valeur de freinage (3; 30) mesurant sa valeur de freinage et la convertissant de manière à former ledit deuxième signal de valeur de freinage;

g) il est prévu un dispositif comparateur (8) qui, côté entrée, reçoit les signaux de valeur de freinage et qui, côté sortie, délivre un signal de commande au dispositif de commande de valeur de freinage (9, 10, 17, 14, 15; 9, 10, 17, 31, 32);

h) le dispositif comparateur (8) est conçu-réalisé de manière à autoriser pour la commande, en tant que signal de commande, le deuxième signal de valeur de freinage, cela en marche normale, et le premier signal de valeur de freinage ou un signal en dépendant.

3. Procédé selon revendication 1, caractérisé par le fait que la marche exceptionnelle est déterminée par une force d'actionnement de l'émetteur de valeur de freinage (20) excédant une valeur minimale prédéterminée et/ou par une course d'actionnement de l'émetteur de valeur de freinage excédant une valeur minimale prédéterminée.

4. Procédé selon revendication 1, caractérisé par le fait qu'au début d'un freinage le circuit de freinage commandé électriquement (II) est exploité en marche exceptionnelle jusqu'à l'établissement de la pression de réponse dans les freins y afférents (13, 16).

5. Procédé selon l'une des revendications 1 ou 3 à 4,

caractérisé par le fait qu'une vitesse d'actionnement de l'émetteur de valeur de freinage (20) excédant une valeur minimale prédéterminée détermine la marche exceptionnelle.

6. Procédé selon l'une des revendications 1 ou 3 à 5, dans lequel la pression de freinage sert de valeur de freinage et l'installation de freinage à plusieurs circuits présente un dispositif de lecture de l'état de charge du véhicule équipé de l'installation à plusieurs circuits et/ou de l'état de charge de l'essieu au nombre d'au moins un auquel est affecté le circuit de freinage commandé électriquement (II),

caractérisé

par le fait que la valeur de freinage du circuit commandé électriquement (II) est mesurée et convertie en un troisième signal électrique de valeur de freinage et par le fait qu'en cas de franchissement, vers le haut ou vers le bas, d'un écart théorique, dépendant de la charge, entre le deuxième signal de valeur de freinage et le troisième signal de valeur de freinage, il se produit un avertissement si l'écart atteint au moins une valeur de tolérance admissible.

7. Dispositif selon revendication 2, caractérisé par les caractéristiques suivantes :

a) il est prévu un dispositif (6) pour identifier la force d'actionnement fournie à l'émetteur de valeur de freinage (20) et/ou pour identifier sa course d'actionnement, dispositif qui, en cas de dépassement d'une valeur minimale prédéterminée de la force d'actionnement et/ou de la course d'actionnement, émet un signal de besoin de valeur de freinage qui est transmis au dispositif comparateur (8);

b) le dispositif comparateur (8) est conçu-réalisé de manière à admettre pour la commande le premier signal de valeur de freinage ou un signal qui en dépend, en cas de réception du signal de besoin de valeur de freinage.

8. Dispositif selon l'une des revendications 2 ou 7, caractérisé par les caractéristiques suivantes :

a) il est prévu un dispositif (5) pour identifier la vitesse d'actionnement de l'émetteur de valeur de freinage (20), dispositif qui, en cas de dépassement d'une valeur minimale prédéterminée, délivre un signal de vitesse au dispositif comparateur (8);

b) le dispositif comparateur (8) est conçu-réalisé de manière à admettre pour la commande le premier signal de valeur de freinage ou un signal qui en dépend, cela en cas de réception du signal de vitesse.

9. Dispositif selon l'une des revendications 2 ou 7 à 8, caractérisé par le fait que le dispositif comparateur (8) est conçu-réalisé de manière à délivrer un signal d'avertissement dans le cas où l'écart entre le premier signal de valeur de freinage et le deuxième signal de valeur de freinage atteint une valeur inadmissible prédéterminée.

10. Dispositif selon l'une des revendications 2 ou 7 à 9, caractérisé par le fait que le dispositif comparateur (8) est conçu-réalisé de manière à admettre pour la commande le premier signal de valeur de freinage ou un signal qui en dépend, cela dans le cas d'un écart prédéterminé inadmissible entre le premier signal de valeur de freinage et le deuxième signal de valeur de freinage.

11. Dispositif selon l'une des revendications 2 ou 7 à 10, caractérisé par les caractéristiques suivantes :
    a) il est prévu un dispositif de réglage (7) pour le premier signal de valeur de freinage;
    b) le dispositif comparateur (8) est conçu-réalisé de manière à délivrer en marche normale, dans le cas d'un écart entre le premier signal de valeur de freinage et le deuxième signal de valeur de freinage, un signal de commande fourni au dispositif de réglage (7) aux fins d'élimination au moins approximative de l'écart.

12. Dispositif selon revendication 11, caractérisé par le fait que le dispositif comparateur (8) est conçu-réalisé de manière à délivrer un signal de réglage si l'écart se situe entre une valeur de tolérance prédéterminée et l'écart inadmissible prédéterminé.

13. Dispositif selon l'une des revendications 11 ou 12, caractérisé par les caractéristiques suivantes :
    a) il est prévu un dispositif (5) pour identifier la vitesse d'actionnement de l'émetteur de valeur de freinage (20), ce dispositif fournissant au dispositif comparateur (8) un signal d'activation aussi longtemps que la vitesse d'actionnement n'excède pas une valeur maximale prédéterminée;
    b) le dispositif comparateur (8) est conçu-réalisé de manière qu'il soit nécessaire qu'il reçoive aussi le signal d'activation pour émettre le signal de réglage.

14. Dispositif selon l'une des revendications 2 ou 7 à 8, dans lequel la pression de freinage sert de valeur de freinage, caractérisé par les caractéristiques suivantes :
    a) il est prévu un capteur de charge (11) dont le signal de charge est amené au dispositif comparateur (8);
    b) dans le circuit de freinage commandé électriquement (II) est agencé, en tant que capteur de valeur de freinage (31, 32), au moins un capteur de pression mesurant la pression de freinage de ce circuit, ce capteur fournissant au dispositif comparateur (8) le troisième signal de valeur de freinage dépendant de la pression de freinage;
    c) le dispositif comparateur (8) est conçu-réalisé de manière à prélever, dans un champ caractéristique mémorisé, en fonction du signal de charge, l'écart théorique entre le signal de valeur de freinage et le troisième signal de valeur de freinage et à fournir un signal d'avertissement si l'écart réel diffère de l'écart théorique, en moins ou en plus, d'au moins la valeur de tolérance admissible.

FIG.1

EP 0 373 316 B1

FIG.2